# EUROPEAN PATENT SPECIFICATION

(11) **EP 3 130 693 B1**
(45) Date of publication and mention of the grant of the patent: **25.07.2018**
(21) Application number: 15777055.3
(22) Date of filing: 10.04.2015
(51) Int. Cl.: C23G 1/24, B60C 1/00, B60C 5/01, D07B 1/06, D07B 1/16, C23G 1/00

(54) **RESIN-METAL COMPOSITE MATERIAL AND TIRE USING SAME**
HARZ-METALL-VERBUNDSTOFF UND REIFEN DAMIT
MATÉRIAU COMPOSITE RÉSINE-MÉTAL ET PNEUMATIQUE L'UTILISANT

(30) Priority: 11.04.2014 JP 2014082046; 11.04.2014 JP 2014082045
(43) Date of publication of application: 15.02.2017
(73) Proprietor: Bridgestone Corporation, Tokyo 104-8340 (JP)
(72) Inventor: TOYOSAWA Shinichi, Tokyo 104-8340 (JP)
(74) Representative: Oxley, Robin John George
(86) International application number: PCT/JP2015/061292
(87) International publication number: WO 2015/156406

(56) References cited:
- JP-A- S60 218 485
- JP-A- 2010 280 928
- JP-A- 2012 011 718
- JP-A- 2012 012 625
- JP-A- 2012 012 684
- JP-A- 2012 097 421
- JP-A- 2013 082 310
- JP-A- 2013 082 311
- JP-A- 2013 104 155
- US-A- 4 269 877

## Description

### TECHNICAL FIELD

The present invention relates to a resin-metal composite material (hereinafter also referred to simply as "composite material") and a tire using the same, and in particular to a resin-metal composite material associated with improvement in adhesion between a resin material and a metal material, and a tire using the same.

### BACKGROUND ART

When obtaining a composite material by reinforcing a resin material with a metal material such as a steel cord, it is necessary to ensure sufficient adhesion between the resin material and the metal material, from the viewpoint of improving product durability.

Particularly, in recent years, various studies have been made on resin tires whose framework portion is formed of a resin material, unlike conventional rubber tires mainly made of a rubber material. When considering reinforcement of such a resin tire with a metal material, it is important to obtain high adhesion between the metal material serving as a reinforcing material and the resin material.

With regard to a composite material of a resin material and a metal material, for example, Patent Document 1 discloses a pneumatic tire using, as a tire reinforcing material, a steel cord composed of steel wires coated with a thermoplastic elastomer composition prepared by dispersing an elastomer composition in a matrix of a thermoplastic resin.

Reference is also made to JP 2012-012684 which discloses a resin-metal composite material and US 4269877 which discloses the use of an aromatic triazole, a precipitation compound and an oxidizing compound for increased surface protection and improved adhesion of brass coated steel to rubber.

### RELATED ART DOCUMENT

### PATENT DOCUMENT

Patent Document 1: Japanese Patent No. 4465916 (claims, etc.)

### SUMMARY OF THE INVENTION

### PROBLEMS TO BE SOLVED BY THE INVENTION

However, a combination of an acid-modified polyolefin commonly used as a resin material excellent in adhesion and a steel cord as an all-purpose reinforcing metal material cannot provide sufficient adhesive strength (peel force) as compared to use of conventional thermosetting adhesives. Thus, improvement has been desired.

In addition, the technique disclosed in Patent Document 1 relates to a steel cord in which steel wires are coated with an elastomer component-containing thermoplastic elastomer composition. While corrosion resistance, bending resistant performance, and the like of the steel cord were studied, no disclosure regarding adhesion between the resin material and the metal material was made, and therefore, the technique is insufficient in terms of the adhesion between the resin material and the metal material.

Accordingly, it is an object of the present invention to provide a resin-metal composite material that ensures high adhesion between a resin material and a metal material. In addition, it is another object of the invention to provide a tire that achieves high durability by using the resin-metal composite material.

### MEANS FOR SOLVING THE PROBLEMS

The present inventor has conducted intensive and extensive studies and consequently found that high adhesion between a resin material and a metal material can be obtained by performing a specific surface treatment on the metal material before compounding the metal material with the resin material and using, as the resin material to be compounded with the surface-treated metal material, a resin material including a specific thermoplastic resin as a main component, thereby completing the invention.

Specifically, a resin-metal composite material of the present invention is a resin-metal composite material including a metal material and a resin material that coats at least a part of a surface of the metal material, wherein
the resin material includes, as a main component, a thermoplastic resin having a polar group; the surface of the metal material is treated with a buffer solution having a pH of from 5 to 7.2, and an abundance ratio of copper to a total amount of copper and zinc (Cu/(Cu + Zn) × 100) in the surface of the metal material is from 55 to 95% by mass.

In the present invention, preferably, the thermoplastic resin having a polar group is a maleic acid-modified polyolefin. In addition, in the invention, the surface of the metal material treated with the buffer solution is additionally treated with an aqueous solution of a heterocyclic compound having two or more heteroatoms. In this case, as the heterocyclic compound, triazoles, and particularly, a triazole having an amino group is preferably used. Additionally, in the present application, the surface of the metal material refers to a depth down to a few nm from the surface thereof.

In addition, a resin tire of the present invention includes a circular tire frame formed of a resin material and a reinforcing layer composed of a reinforcing member wound around an outer circumference of the tire frame, wherein the reinforcing member includes the resin-metal composite material of the invention described above.

### EFFECTS OF THE INVENTION

The present invention has enabled achievement of a resin-metal composite material that ensures high adhesion between a resin material and a metal material, and has enabled a highly durable tire to be obtained using the resin-metal composite material.

### BRIEF DESCRIPTION OF THE DRAWINGS

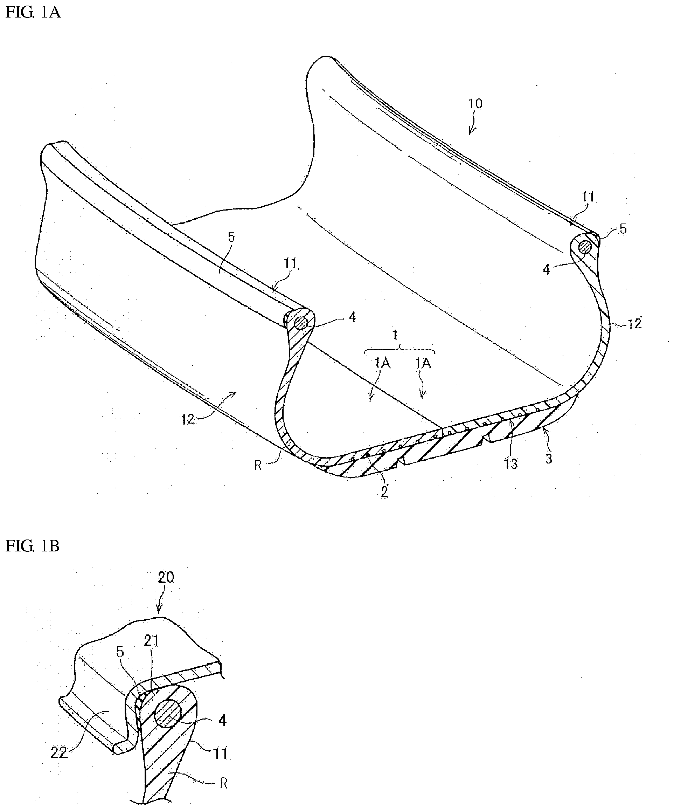

FIG. 1A is a cut-away perspective view cross-sectionally depicting a part of one example of a tire of the present invention, and FIG. 1B is a cut-away perspective view cross-sectionally depicting a part near a bead portion in a state in which the tire is fitted into a rim.

### MODE FOR CARRYING OUT THE INVENTION

Hereinafter, embodiments of the present invention will be described in detail with reference to the drawings.

A resin-metal composite material of the invention includes a metal material and a resin material that coats at least a part of a surface of the metal material. In the invention, it is important to use, as the resin material, a resin material that includes, as a main component, a thermoplastic resin having a polar group, and, as the metal material, a metal material whose surface has been treated with a buffer solution having a pH of from 5 to 7.2.

From the viewpoint of facilitating handling and preventing metal corrosion, a lubricant and/or a rust inhibitor can be present on the surface of the metal material, and it is thus considered that such a lubricant and/or rust inhibitor will become a coat film and inhibit adhesion between the metal material and the resin material. Additionally, in a case in which the metal material includes a plated layer on the surface thereof, an oxide of a metal such as copper or zinc forming the plated layer is considered to form a coat film on the surface of the metal material and similarly inhibit adhesion between the metal material and the resin material. Thus, by removing at least a part of the coat film present on the surface of the metal material through a treatment using a buffer solution, the surface of the metal material is adequately activated into a state suitable for adhesion with the resin material, so that the adhesion between the metal material and the resin material can be improved.

A buffer solution to be used for the above pretreatment is one having a pH of from 5 to 7.2. In a case of continuously manufacturing a composite material or in a case of immersing a metal material in a treatment solution, then washing it with water or the like, and again immersing it in the treatment solution, metal elution or water infiltration from a metal material surface can cause fluctuation of pH of the treatment solution. However, when the treatment solution is the above buffer solution, the pH hardly fluctuates, which is advantageous. Additionally, when the pH of the buffer solution exceeds 7.2, it is difficult to remove the coat film present on the surface of the metal material, thereby reducing an initial adhesion between the metal material and the resin material. On the other hand, when the pH of the buffer solution is less than 5, a negative influence occurs on the surface of the metal material, and thereby wet heat resistant adhesion and adhesion durability are reduced, causing the metal material to be easily corroded, and thus deteriorating durability of the metal material.

The pH of the buffer solution is preferably from 5.0 to 6.4, from the viewpoint of the adhesion between the metal material and the resin material and durability of the metal material. By setting the pH of the buffer solution to from 5.0 to 6.4, pull-out force and adhesion durability can be improved in a more-balanced manner.

In addition, in the invention, it is important that the abundance ratio of copper to the total amount of copper and zinc (Cu/(Cu + Zn) × 100) in the surface of the metal material after the treatment with the buffer solution is from 55 to 95% by mass. This can ensure high adhesion between the resin material and the metal material, and pull-out force and adhesive durability can be obtained in a well-balanced manner. When the abundance ratio of copper is less than 55%, sufficient adhesion with the resin material cannot be obtained, whereas when the abundance ratio thereof exceeds 95% by mass, durability at an adhered interface is reduced. The abundance ratio of copper is suitably from 60 to 95% by mass, and more suitably from 70 to 95% by mass, from the viewpoint of improving pull-out force and adhesive durability in a well-balanced manner. Herein, a method for controlling the abundance ratio of copper to the total amount of copper and zinc in the surface of the metal material can be a chemical treatment as typified by the treatment with the buffer solution described above or a physical treatment such as surface polishing with sand paper. Among them, a treatment with a buffer solution is preferable when considering uniformity of surface treatment. Non-uniform surface treatment negatively influences adhesive strength and the like.

The buffer solution includes at least one kind of acid. The acid is not particularly limited. From the viewpoint of the adhesion between the metal material and the resin material and the durability of the metal material, weak acids are preferable, and acids having an acid dissociation constant (pKa) of from 4 to 8 are more preferable. Examples thereof include acetic acid, phosphoric acid, phthalic acid, succinic acid, citric acid, and carbonic acid. Among them, acetic acid and phosphoric acid are preferable. The acids may be used singly or in mixture of two or more kind thereof.

Specific examples of the buffer solution include acetic acid-sodium acetate buffer solution, sodium dihydrogen phosphate-disodium hydrogen phosphate buffer solution, potassium hydrogen phthalate-sodium hydroxide buffer solution, sodium citrate-sodium hydroxide buffer solution, and succinic acid-sodium tetraborate buffer solution. Among them, acetic acid-sodium acetate buffer solution and sodium dihydrogen phosphate-disodium hydrogen phosphate buffer solution are preferable.

A metal component included in the buffer solution is preferably sodium or potassium. Preferably, metals other than that are substantially not included in the buffer solution, for example, from the viewpoint of easiness of pH adjustment of the buffer solution or from the viewpoint of easiness of drainage treatment of the buffer solution after use.

An inorganic salt, alcohol, and the like may be added to the buffer solution if necessary, as long as the effects of the invention are not impaired.

The buffer solution has a temperature of preferably from 10 to 40°C, and more preferably from 15 to 30°C.

A method for treating the surface of the metal material using the buffer solution can be any method as long as the metal material and the buffer solution are contacted with each other, and, examples of the method include immersion of the metal material in a tank containing the buffer solution or spraying of the buffer solution onto the metal material. This treatment can be repeated a plurality of times. For example, spraying of the buffer solution onto the metal material may be repeated a plurality of times, or after immersion of the metal material in the buffer solution, the metal material may be washed with water or the like, and again may be immersed in the buffer solution. The time length of contact between the metal material and the buffer solution can be changed as appropriate depending on the pH of the buffer solution, and is usually in a range of from 0.5 to 20 seconds, and preferably from 1 to 15 seconds. When the pH of the buffer solution to be used is low, the time of surface treatment becomes short, whereas when the pH thereof is high, the surface treatment time becomes long. In other words, it can be said that, when the pH of the buffer solution to be used is high, the degree of surface treatment on the metal material can be easily adjusted by adjustment of surface treatment time.

In the invention, the metal material after the treatment with the buffer solution may be washed with water. The buffer solution hardly causes corrosion of the metal material and hardly has any negative influence on the plated layer, and it is therefore unnecessary to provide a washing step as an essential step. However, in a case in which the buffer solution remaining on the surface of the metal material can cause corrosion of the metal material or negatively influences the plated layer, a washing step is preferably provided from the viewpoint of durability and the like of the metal material. Water that is used for washing in this case may be ion-exchanged water or tap water, but preferred is ion-exchanged water.

In the invention, the surface of the metal material is treated with both the buffer solution and the aqueous solution of a
heterocyclic compound, and more specifically, the surface of the metal material that has been treated with the buffer solution is additionally treated with the aqueous solution of a heterocyclic compound having two or more heteroatoms. Thereby, the adhesion between the metal material and the resin material can be further improved.

Specifically, by treating the surface of the metal material with the aqueous solution of a heterocyclic compound having two or more heteroatoms, a heteroatom in the heterocyclic compound is coordinately bonded to a metal atom in the surface of the metal material and strongly adsorbs thereto. When the surface-treated metal material is compounded with a thermoplastic resin having a polar group, another heteroatom in the heterocyclic compound adsorbing to the surface of the metal material forms a hydrogen bond or a covalent bond with the polar group of the thermoplastic resin, as a result of which a strong adhesion occurs between the metal material and the resin material via the heterocyclic compound. Particularly, in the invention, since the surface of the metal material is subjected to the treatment with the buffer solution before the treatment with the aqueous solution of a heterocyclic compound, the surface of the metal material is adequately activated into a state suitable for adhesion with the resin material. Thus, interaction with the polar group of the heterocyclic compound is further enhanced, and synergistically the adhesive strength can be improved. For example, in a case of a metal material including a brass plated layer, the removal of the coat film can increase a Cu percentage in the surface, so that a more significant effect of improving the adhesive strength seems to be obtainable with an adhesion mechanism associated with a treatment using an aqueous solution of a heterocyclic compound that will be described later.

For example, it is known that triazoles adsorb specifically to Cu, whereas a maleic acid group in an acid-modified PP interacts with N of an amide group or the like. Accordingly, an adhesion mechanism in a case of using an acid-modified polypropylene (PP) having a maleic acid group as the resin material and a brass-plated steel cord whose surface has been treated with an aqueous solution of triazoles as the metal material will be as follows.

Specifically, in this case, two of three N atoms in the triazoles are coordinately bonded to Cu in a steel cord surface, and one N atom forms a hydrogen bond or a covalent bond with a -COOH group in the acid-modified PP, thereby forming strong adhesion between the steel cord and the acid-modified PP. Thus, according to the invention, it seems that adhesion between usually used acid-modified polyolefin and the steel cord is also improved as compared to conventional techniques, and an adhesive strength equal to or higher than conventional thermosetting adhesives can be obtained, so that, for example, in a case of treating the steel cord with an aqueous solution of triazoles, adhesion at room temperature can be improved by 20 to 40 percent in terms of pull-out force when compared with the conventional techniques.

In the invention, since such an adhesion mechanism as described above is used, it is necessary to use a heterocyclic compound having two or more heteroatoms, and preferably three or more heteroatoms. Particularly, a five-membered cyclic compound and a six-membered cyclic compound having two or more heteroatoms are preferably used. Examples of the heteroatoms include N, P, O, and S. Among them, preferred are heterocyclic compounds whose heteroatoms are N or O, and more preferred are those having two or more N atoms. Specific examples of such heterocyclic compounds include triazoles, imidazoles, oxazolines, triazines, and pyrazines. Among them, in terms of enabling the adhesion to be further improved, triazoles and triazines are particularly preferable, and triazoles are most preferable. Examples of triazoles include benzotriazole, 1,2,3-triazole, and 1,2,4-triazole, and 4-amino-1,2,4-triazole, and particularly, amino group-containing triazoles are preferable. In addition, while derivatives of the respective compounds can also be used, preferred are those containing no sulfur atoms.

The concentration of the aqueous solution varies depending on the kind of a heterocyclic compound to be used, but is preferably from 0.01 to 100 g/L, and more preferably from 0.1 to 10 g/L. When the concentration thereof is less than 0.01 g/L, the effect of the surface treatment is reduced and thus the effect of improving the adhesion can be insufficient. On the other hand, when the concentration thereof exceeds 100 g/L, the heterocyclic compound cannot be sufficiently dissolved and is dispersed in a solid form in the solution or aggregated and deposited on the metal material surface after the treatment, thereby probably negatively influencing the adhesion.

The pH of the aqueous solution is preferably in a range of from 4 to 10, and more preferably in a range of from 5 to 9.5. When the pH is less than 4, oxidation of the surface of the metal material is advanced, which creates concerns such as rusting of the surface of the metal material after having been integrated with the resin material. On the other hand, when the pH exceeds 10, the surface of the metal material becomes a hydroxide, which weakens the degree of interaction with the heterocyclic compound, whereby an obtained resin-metal composite material has a reduced adhesive strength between the metal material and the resin material.

The temperature of the aqueous solution is preferably from -5 to 60°C, and more preferably from 0 to 50°C. When the solution temperature is less than -5°C, the aqueous solution can be frozen, whereas when the temperature exceeds 60°C, a change in concentration of the aqueous solution and a loss of amount of the solution due to evaporation of moisture can be problematic.

The method for treating the surface of the metal material by using the aqueous solution of a heterocyclic compound can be any method as long as the metal material is contacted with the aqueous solution, and examples of the method include immersion of the metal material in a tank containing the aqueous solution and wiping of the metal material with a sponge, cotton, cloth, or the like impregnated with the aqueous solution. In the case of treating the metal material by immersing in the aqueous solution, the treatment time (immersion time) is preferably from 0.2 to less than 60 seconds, and particularly preferably from 0.5 to 30 seconds. When the immersion time is less than 0.2 seconds, there is a concern that the treatment is not sufficiently advanced, whereas when it is equal to or more than 60 seconds, the process of the treatment becomes long in a case of continuous treatment, which is not preferable in terms of production. Additionally, a pH stabilizer, a surfactant, a defoaming agent, and the like may be optionally added to the aqueous solution if necessary.

Specific examples of the metal material to be used in the present invention include those made of metals such as iron, steel (stainless steel), lead, aluminum, copper, brass, bronze, Monel metal alloys, nickel, and zinc, and the surface thereof may be provided with, for example, a plated layer of zinc plating, copper plating, bronze plating, brass (brass) plating, or the like. Particularly, preferred is a metal material that includes a plated layer of bronze plating or brass plating, and particularly, of brass plating, since the surface thereof is adequately activated by the buffer solution and adhesion with the resin material is improved. In addition, although a ratio between Cu and Zn (Cu : Zn) within (inside) the brass plating is usually from 60 : 40 to 70 : 30 based on mass, the composition of the surface is different from the bulk (inside) and tends to be Zn-rich. In the invention, performing a treatment with the buffer solution can increase the abundance ratio of Cu in the Zn-rich surface of the metal material. The brass plated layer has a layer thickness of, usually, from 100 to 300 nm. In addition, examples of the form of the metal material include a metal wire rod, a metal plate, and a metal chain.

Particularly, a steel wire (steel wire rod) that is an all-purpose reinforcing metal material generally refers to a wire-shaped metal including, as a main component, steel, i.e., iron (the mass of iron with respect to a total mass exceeds 50% by mass), and may be made of only iron or may include any metal other than iron, for example, such as zinc, copper, aluminum, or tin. The steel wire has a wire diameter of preferably from 0.1 to 5.5 mm, and more preferably from 0.15 to 5.26 mm. Herein, the wire diameter of the steel wire refers to a maximum length of a cross-sectional shape vertical to an axial line of the steel wire. The cross-sectional shape vertical to the axial line of the steel wire is not particularly limited, and maybe oblong, rectangular, triangular, multi-angular, or the like, but is typically circular.

In addition, a steel cord used in a tire is usually composed of a single-line steel wire manufactured by brass-plating the surface thereof and undergoing dry-type and wet-type wire drawing processes or a stranded wire formed by stranding together a plurality of steel wires thus formed.

In the invention, the thermoplastic resin to be used as the resin material can be any as long as the resin has a polar group such as a carboxyl group (-COOH), a hydroxyl group (-OH), an amino group (-NH₂), or the like. The thermoplastic resin is a resin having so-called thermoplastic properties in which material is softened and fluidized along with increase in temperature and becomes relatively hard and strong when cooled, and encompasses a so-called thermoplastic elastomer.

Examples of the thermoplastic resin include urethane resins, olefin resins such as polypropylene (PP) and polyethylene (PE), vinyl chloride resins, and polyamide resins. Additionally, examples of the thermoplastic elastomer include amide-based thermoplastic elastomers (TPA), ester-based thermoplastic elastomers (TPC), olefin-based thermoplastic elastomer (TPO), styrene-based thermoplastic elastomers (TPS), urethane-based thermoplastic elastomers (TPU), thermoplastic crosslinked rubbers (TPV) and other thermoplastic elastomers (TPZ) that are defined by JISK 6418. In the invention, among these resin materials in which a polar group has been introduced, any one kind may be used alone or a plurality of kinds thereof may be mixed together and used. Particularly, among maleic anhydride-modified polyolefins having a maleic acid group as the polar group, maleic anhydride-modified PPs are preferable due to excellent adhesion thereof with the metal material. Examples of commercially available products of maleic anhydride-modified PPs include MODIC manufactured by Mitsubishi Chemical Corporation and ADMER manufactured by Mitsui Chemicals, Inc.

All-purpose additives such as inorganic filler, an antioxidant, and an ultraviolet light absorber may be added to the resin material, if necessary. Amounts of the additives included in the resin material are equal to or less than 20% by mass with respect to a total mass of the layer of the resin material provided on the surface of the metal material.

In the resin-metal composite material of the invention, at least a part of the surface of the surface-treated metal material is coated with the resin material, thereby obtaining higher adhesion between the resin material and the metal material than conventional ones. The resin-metal composite material of the invention is applicable to various kinds of products made of resin and members made of resin each formed of a resin material and reinforced by a metal material, and can exert excellent durability. Specifically, the resin-metal composite material of the invention can be suitably applied, for example, to tires, belts, and hoses manufactured using resin materials, and is particularly useful when applied to resin tires required to have high durability for safety.

The method for obtaining the composite material of the invention can be any method as long as the method can integrate the resin material with the metal material by melting the resin material and coating at least a part of the surface of the surface-treated metal material with the molten resin material, and is not particularly limited. Specific examples of the method include a method of coating the surface of the metal material with the molten resin material, an injection molding method of injecting the molten resin material into a mold provided with the metal material and cooling, and a method of pouring the resin material into a compression-molding mold provided with the metal material arranged thereinside.

In the composite material of the invention, the thickness of the resin material that coats the metal material is not particularly limited, and can be selected as appropriate according to a resin product for applying the composite material, a portion for applying the composite material, or the like. For example, the composite material may be obtained by forming a resin material layer having a layer thickness of about from 0.1 to 5.0 mm on the surface of the metal material, or the metal material may be directly embedded in a part of a product made of a resin material and compounded therewith.

FIG. 1A is a cut-away perspective view cross-sectionally depicting a part of one example of a resin tire of the present invention, and FIG. 1B is a cut-away perspective view cross-sectionally depicting a part near a bead portion in a state in which the tire is fitted into a rim. As illustrated, a tire 10 has substantially the same cross-sectional shape as a conventional common rubber pneumatic tire, and includes a circular frame formed of a resin material at least from side portions to a crown portion.

The illustrated tire 10 includes a tire case 1 formed of a resin material that is a circular frame including a pair of right and left bead portions 11 that come in contact with a bead seat portion 21 and a rim flange 22 of a rim 20, sidewall portions 12 extending from the bead portions 11 outwardly in a tire radial direction, and a crown portion 13 continuing between both sidewall portions 12. In addition, on an outside in a tire radial direction of the crown portion 13, a crown portion reinforcing layer 2 composed of a reinforcing member helically wound around an outer circumference of the tire case 1 in a tire circumferential direction is provided to reinforce rigidity in a circumferential direction of the crown portion 13. Furthermore, on an outer circumference thereof is arranged a tread rubber layer 3. Still furthermore, a circular ring-shaped bead core 4 composed of a reinforcing cord, as in conventional common pneumatic tires, is embedded in the bead portions 11.

In the invention, applying the composite material of the invention to the reinforcing member of the crown portion reinforcing layer 2 arranged on the outside in the tire radial direction of the crown portion 13 can improve adhesion between the resin material constituting the frame of the tire and the metal material as the reinforcing member, so that there can be obtained a resin tire having excellent durability as compared to conventional ones. In addition, the resin material used in the composite material and the resin material used in the frame section of the resin tire may be the same as or different from each other. Additionally, the reinforcing member of the crown portion reinforcing layer 2 may be entirely embedded in the crown portion 13 or partially embedded therein. However, most preferably, the entire reinforcing member is embedded in the crown portion 13. The reinforcing member may be formed by a reinforcing cord in which a metal wire rod(s) has(have) been coated with a resin material, or may be formed by a sheet-shaped reinforcing material in which a metal wire rod(s) has(have) been coated with a resin material.

The tire case 1 can be formed by bonding to face each other, on a tire equatorial plane, a pair of circular ring-shaped tire half bodies 1A having the same shape each obtained by integrally molding the bead portion 11 and the sidewall portion 12 of one side with a half-widthwise crown portion 13 in a mold. The tire case 1 is not limited to one formed by bonding two members together in this way, and may be one formed by bonding three members together or one formed by integrally molding a pair of bead portions 11 and sidewall portions 12 with a crown portion 13 spanning between both sidewall portions. In addition, the tire case may be formed into a complete tube shape in which inner side ends in the tire radial direction of the bead portions 11 are extended in the tire axial direction and connected to each other. Additionally, when forming the tire case by bonding a plurality of members, a welding method or a hot plate welding method using a molten resin can be used as a method for bonding portions to be bonded. The molten resin to be used in this case may be the same as or different from the resin material constituting the tire case. The tire half body 1A or the tire case 1 can be manufactured, for example, by arranging the bead cores 4 and the reinforcing member constituting the crown portion reinforcing layer 2 in the same mold and performing injection molding using a molten resin material R.

Examples that can be used as the resin material constituting the tire case 1 include thermosetting resins, thermoplastic resins, and thermoplastic elastomers (TPE) that have rubber-like elasticity. Considering elasticity required during traveling, moldability during manufacturing, and the like, thermoplastic elastomers are preferably used. Examples of the thermoplastic resins and the thermoplastic elastomers that can be used are the same as those mentioned regarding the resin material to be used in the composite material. Among them, TPA, TPC, TPO, TPU, and TPV are preferable. In addition, examples of the thermosetting resins include phenolic resins, urea resins, melamine resins, epoxy resins, and polyester resins. The tire case 1 may be entirely made of a single resin material, or as with conventional common rubber pneumatic tires, each portion of the tire case 1 (the bead portions 11, the sidewall portions 12, the crown portion 13, etc.) may be formed of a resin material having different characteristics. Additionally, at each portion of the tire case 1, a reinforcing material, such as, for example, a fiber, a cord, a nonwoven fabric, or a woven fabric made of a polymer material or metal can be arranged in an embedded manner for reinforcement.

In the resin material constituting the tire case 1, a deflection temperature under a load of 0.45 MPa according to ISO 75-2 or D648 standards is preferably equal to or more than 60°C, and particularly preferably from 85 to 130°C. Furthermore, preferably, the resin material has a yield point tensile strength of equal to or more than 10 MPa, and particularly of from 15 to 50 MPa, and has a yield point tensile elongation of equal to or more than 10%, and particularly of from 15 to 35%. Still furthermore, preferably, the resin material has a rupture elongation of equal to or more than 50%, and particularly from 100 to 600%, and has a Vicat softening point according to K7206 A method of equal to or more than 130°C, and particularly of from 150 to 300°C.

In the illustrated tire, the circular ring-shaped bead core 4 made of a resin or a metal, as in the conventional common pneumatic tires, is embedded in the bead portions 11 in order to ensure rigidity of the bead portions 11 and enhance fitting compatibility with the rim. A metal material constituting the bead core 4 can be a steel cord, and as a resin material therefor, any of various kinds of organic fiber cords can be used. In a case in which the bead core 4 is formed by a metal material such as a steel cord, the composite material of the invention can be applied also to the bead core 4. In addition, the bead core 4 can be omitted when the rigidity of the bead portions 11 is ensured and there is no problem in fitting into the rim 20.

Additionally, at parts of the bead portions 11 that come in contact with the rim 20, at least at parts thereof that contact with the rim flange 22 of the rim 20 is preferably provided a circular ring-shaped seal member 5 made of a material softer than the resin material constituting the tire case 1, for example, a rubber having elasticity and excellent sealability (air-tightness), for purposes of air sealing and rim slippage prevention. The seal member 5 can be formed also at parts thereof that come in contact with the bead seat. The rubber constituting the seal member 5 is preferably the same kind as that used in outer surfaces of bead portions of the conventional common rubber pneumatic tires. In addition, the seal member 5 can be omitted as long as sealability with respect to the rim 20 can be ensured by only the resin material constituting the tire case 1. Additionally, the seal member 5 may be formed of another kind of resin material having higher sealability than the resin material constituting the sidewall portions 12.

The tread rubber layer 3 arranged at a tread portion of an outer circumferential side of the crown portion reinforcing layer 2 is preferably made of a rubber having higher abrasive resistance than the resin material constituting the tire case 1. Such a rubber can be the same kind as that used for tread rubber of the conventional rubber pneumatic tires. Additionally, in place of the tread rubber layer 3, a tread may be used that is formed of another kind of resin material having higher abrasive resistance than the resin material constituting the tire case 1. Furthermore, on a surface of the tread rubber layer 3, a tread pattern composed of a plurality of grooves can be formed as appropriate on a surface thereof that contacts with a road surface, as in the conventional rubber pneumatic tires.

### EXAMPLES

Hereinafter, the present invention will be described in more detail by using Examples.

As a metal material, a brass-plated steel cord (wire diameter 1.1 mm; plating ratio (bulk) Cu : Zn = 63 : 37) was used. The brass-plated steel cord had a Zn-rich surface composition. In surfaces of the steel cords of respective Examples and Comparative Examples, an abundance ratio of copper to the total amount of copper and zinc (Cu/(Cu + Zn) × 100) was adjusted so as to have respective values shown in Tables below after treatment. Resin materials used were a maleic anhydride-modified PP (MODIC P555, manufactured by Mitsubishi Chemical Corporation) and an unmodified PP (J700GP, manufactured by Prime Polymer Co., Ltd).

### <Reference Example 1>

The metal material was immersed in a sodium acetate buffer solution (0.1 mol/L, pH 6.4, solution temperature 25°C) for an immersion time of 12 seconds to perform a surface treatment.

### <Example 2>

The metal material was immersed in a sodium acetate buffer solution (0.1 mol/L, pH 6.4, solution temperature 25°C) for an immersion time of 12 seconds to perform a surface treatment. After that, the surface-treated metal material was immersed in an aqueous solution of 1,2,3-triazole (2 g/L, pH = 6.0, solution temperature 25°C) for an immersion time of 6 seconds to perform a surface treatment.

### <Example 3>

The metal material was immersed in a sodium acetate buffer solution (0.1 mol/L, pH 6.4, solution temperature 25°C) for an immersion time of 12 seconds to perform a surface treatment. After that, the surface-treated metal material was immersed in an aqueous solution of 4-amino-1,2,4-triazole (2 g/L, pH = 6.2, solution temperature 25°C) for an immersion time of 6 seconds to perform a surface treatment.

### <Example 4>

The metal material was immersed in a sodium acetate buffer solution (0.1 mol/L, pH 6.2, solution temperature 25°C) for an immersion time of 12 seconds to perform a surface treatment. After that, the surface-treated metal material was immersed in an aqueous solution of 1,2,4-triazole (2 g/L, pH = 6.0, solution temperature 25°C) for an immersion time of 6 seconds to perform a surface treatment.

### <Comparative Example 1>

The metal material was not surface-treated.

### <Comparative Example 2>

The metal material was immersed in a sodium acetate buffer solution (0.1 mol/L, pH 4.9, solution temperature 25°C) for an immersion time of 12 seconds to perform a surface treatment.

### <Comparative Example 3>

The metal material was immersed in a sodium acetate buffer solution (0.1 mol/L, pH 7.3, solution temperature 25°C) for an immersion time of 12 seconds to perform a surface treatment.

### <Comparative Example 4>

The metal material was immersed in an aqueous solution of 4-amino-1,2,4-triazole (2 g/L, pH = 6.2, solution temperature 25°C) for an immersion time of 6 seconds to perform a surface treatment.

### <Comparative Example 5>

As a resin material, PP was in place of the maleic anhydride-modified PP, and surface treatments were performed as in Example 3.

### <Example 5>

The metal material was immersed in a sodium acetate buffer solution (0.1 mol/L, pH 7.2, solution temperature 25°C) for an immersion time of 12 seconds to perform a surface treatment. After that, the surface-treated metal material was immersed in an aqueous solution of 4-amino-1,2,4-triazole (2 g/L, pH = 6.2, solution temperature 25°C) for an immersion time of 6 seconds to perform a surface treatment.

### <Example 6>

The metal material was immersed in a sodium acetate buffer solution (0.1 mol/L, pH 5.0, solution temperature 25°C) for an immersion time of 12 seconds to perform a surface treatment. After that, the surface-treated metal material was immersed in an aqueous solution of 4-amino-1,2,4-triazole (2 g/L, pH = 6.2, solution temperature 25°C) for an immersion time of 6 seconds to perform a surface treatment.

### <Comparative Examples 6 and 7>

The metal materials were surface-treated as in Examples 5 and 6, respectively, according to conditions of the Table below.

### <Example 7>

The metal material was surface-treated as in Example 6 according to conditions of the Table below.

### <Example 8>

The metal material was immersed in a sodium acetate buffer solution (0.1 mol/L, pH 6.8, solution temperature 25°C) for an immersion time of 12 seconds to perform a surface treatment. After that, the surface-treated metal material was immersed in an aqueous solution of 4-amino-1,2,4-triazole (2 g/L, pH = 6.2, solution temperature 25°C) for an immersion time of 6 seconds to perform a surface treatment.

### <Example 9>

The metal material was immersed in a sodium acetate buffer solution (0.1 mol/L, pH 6.0, solution temperature 25°C) for an immersion time of 12 seconds to perform a surface treatment. After that, the surface-treated metal material was immersed in an aqueous solution of 4-amino-1,2,4-triazole (2 g/L, pH = 6.2, solution temperature 25°C) for an immersion time of 6 seconds to perform a surface treatment.

### <Comparative Example 8>

The metal material was immersed in a sodium acetate buffer solution (0.1 mol/L, pH 4.9, solution temperature 25°C) for an immersion time of 12 seconds to perform a surface treatment. After that, the surface-treated metal material was immersed in an aqueous solution of 4-amino-1,2,4-triazole (2 g/L, pH = 6.2, solution temperature 25°C) for an immersion time of 6 seconds to perform a surface treatment.

### <Comparative Example 9>

The metal material was surface-treated as in Comparative Example 3 according to conditions of the Table below.

### <Method for Producing Adhesion Evaluation Sample>

The steel cord as the metal material prepared in each of the Examples and the Comparative Examples was kept in a candle mold, and, in this state, insert molding was performed using the maleic anhydride-modified PP as the resin material to produce an evaluation sample such that the steel cord adhered in the center of a rod-shaped resin molded body. The obtained evaluation sample had a circular cross-section with a diameter of 10 mm, and an adhesion length between the resin material and the metal material was made to be 20 mm. As for Comparative Example 5, an evaluation sample was produced using PP as the resin material.

### <Pull-Out Force Measurement Method>

The steel cord was pulled out from the evaluation sample to measure adhesive strength. Pull-out rate was 10 mm/min and measurement temperature was 25°C. Results of the measurement are shown in the Tables below by values of pull-out forces and index values based on 100 representing the pull-out force of Reference Example 1.

### <Adhesion Durability Evaluation Method>

The evaluation samples were placed in a thermostatic bath with a relative humidity of 90% and a temperature of 70°C, and taken out after passage of two weeks to measure pull-out forces again. Retention rates with respect to the pull-out forces measured before durability evaluation were calculated from the obtained pull-out forces to be designated as indexes of adhesion durability. Results of the measurement are shown in the Tables below by index values based on 100 representing the retention rate of Reference Example 1.

**[Table 1]**

| | | Reference Example 1 | Example 2 | Example 3 | Example 4 | Comparative Example 1 | Comparative Example 2 | Comparative Example 3 |
|---|---|---|---|---|---|---|---|---|
| Coating material | | maleic anhydride-modified PP | maleic anhydrid e-modifi ed PP | maleic anhydrid e-modifi ed PP | maleic anhydrid e-modifi ed PP | maleic anhydride-modified PP | maleic anhydride-modified PP | maleic anhydride-modified PP |
| Presence or absence of treatment with buffer solution | | Treated | Treated | Treated | Treated | Untreated | Treated | Treated |
| pH | | 6.4 | 6.4 | 6.4 | 6.2 | - | 4.9 | 7.3 |
| Plating percentage (surface)*¹ (Cu/Cu + Zn) × 100 (%) | | 74 | 74 | 74 | 72 | 26 | 88 | 28 |
| Presence or absence of treatment with heterocyclic compound | | Untreated | Treated | Treated | Treated | Untreated | Untreated | Untreated |
| Kind of triazole | | - | 1,2,3-triazole | 4-amino-1,2,4-triazole | 1,2,4-triazole | - | - | - |
| Pull-out force | (k N) | 0.76 | 0.87 | 0.94 | 0.78 | 0.68 | 0.79 | 0.67 |
| | (In de x) | 100 | 114 | 124 | 103 | 89 | 104 | 88 |
| Adhesion durability (Index) | | 100 | 103 | 103 | 98 | 93 | 58 | 91 |
| Overall evaluation (Index) *² | | 200 | 217 | 227 | 201 | 182 | 162 | 179 |

| | | | | | | | | |
|---|---|---|---|---|---|---|---|---|
| *1) Surface percentage was measured by an X-ray photoelectron spectroscopy using PHI 5000 manufactured by Ulvac-Phi, Inc. *2) Totals of index values of pull-out force and index values of adhesion durability. Values equal to or more than 200 are regarded as acceptable. | | | | | | | | |

**[Table 2]**

| | | Comparative Example 4 | Comparative Example 5 | Example 5 | Example 6 | Comparative Example 6 | Comparative Example 7 |
|---|---|---|---|---|---|---|---|
| Coating material | | maleic anhydride-modified PP | PP | maleic anhydri de-modi fied PP | maleic anhydri de-modi fied PP | maleic anhydride-modified PP | maleic anhydride-modified PP |
| Presence or absence of treatment with buffer solution | | Untreated | Treated | Treated | Treated | Treated | Treated |
| pH | | - | 6.4 | 7.2 | 5 | 7.2 | 5 |
| Plating percentage (surface)*¹ (Cu/Cu + Zn) × 100 (%) | | 26 | 74 | 60 | 95 | 50 | 96 |
| Presence or absence of treatment with heterocyclic compound | | Treated | Treated | Treated | Treated | Treated | Treated |
| Kind of triazole | | 4-amino-1,2,4-triazole | 4-amino-1,2,4-triazole | 4-amino - 1,2,4-triazole | 4-amino - 1,2,4-triazole | 4-amino-1,2,4-triazole | 4-amino-1,2,4-triazole |
| Pull-out force | (kN) | 0.69 | 0.25 | 0.78 | 1.05 | 0.65 | 0.82 |
| | (Index ) | 91 | 33 | 103 | 138 | 86 | 108 |
| Adhesion durability (Index) | | 99 | 100 | 120 | 100 | 80 | 50 |
| Overall evaluation (Index)*² | | 190 | 133 | 223 | 238 | 166 | 158 |

**[Table 3]**

| | | Example 7 | Example 8 | Example 9 | Comparati ve Example 8 | Comparati ve Example 9 |
|---|---|---|---|---|---|---|
| Coating material | | maleic anhydride-modified PP | maleic anhydride-modified PP | maleic anhydride-modified PP | maleic anhydride-modified PP | maleic anhydride-modified PP |
| Presence or absence of treatment with buffer solution | | Treated | Treated | Treated | Treated | Treated |
| pH | | 5 | 6.8 | 6 | 4.9 | 7.3 |
| Plating percentage (surface)*¹ (Cu/Cu + Zn) × 100 (%) | | 85 | 80 | 70 | 88 | 88 |
| Presence or absence of treatment with heterocyclic compound | | Treated | Treated | Treated | Treated | Untreated |
| Kind of triazole | | 4-amino-1,2,4-triazole | 4-amino-1,2,4-triazole | 4-amino-1,2,4-triazole | 4-amino-1,2,4-triazole | - |
| Pull-out force | (kN) | 0.98 | 0.82 | 0.97 | 0.8 | 0.67 |
| | (Index) | 129 | 108 | 128 | 105 | 88 |
| Adhesion durability (Index) | | 105 | 110 | 110 | 70 | 91 |
| Overall evaluation (Index) *² | | 234 | 218 | 238 | 175 | 179 |

As shown in the Tables above, it was confirmed that, in the composite material of each Example obtained by coating the metal material with the resin material after the surface treatment thereon using the predetermined buffer solution, the pull-out force was significantly improved as compared to the composite material of Comparative Example 1 obtained by coating the metal material with the resin material without performing the surface treatment thereon. Additionally, the composite materials of Examples 2 to 9, for which the heterocyclic compound-using treatment was performed on the metal material additionally after the treatment with the buffer solution, were confirmed to have synergistically improved the pull-out force as compared to the composite material of Reference Example 1, for which no heterocyclic compound-using treatment was performed on the same combination of the metal material and the resin material.

On the other hand, in Comparative Example 2 having used the buffer solution with the low pH, the pull-out force was improved, but the adhesion durability was significantly lower than in Comparative Example 1 having performed no surface treatment. Additionally, in Comparative Example 3 having used the buffer solution with the high pH, both the pull-out force and the adhesion durability were lower than in Comparative Example 1 having performed no surface treatment. Additionally, Comparative Example 4 having performed only the heterocyclic compound-using treatment without any treatment with a buffer solution had a better result in the overall evaluation than Comparative Examples 1 to 3, but was insufficient in pull-out force. Furthermore, in Comparative Example 5, the pull-out force was significantly low due to the absence of a polar group in the resin material. Furthermore, in Comparative Example 6, the excessively small abundance ratio of copper deteriorated both the pull-out force and the adhesion durability, and in Comparative Example 7, the excessively large abundance ratio of copper significantly deteriorated the adhesion durability. Still furthermore, in Comparative Example 8 having used the buffer solution with the low pH, the pull-out force was improved, but the adhesion durability was significantly reduced. Still furthermore, in Comparative Example 9 having used the buffer solution with the high pH, both the pull-out force and the adhesion durability were lowered, and even with use of the heterocyclic compound, the pull-out force was not improved.

### DESCRIPTION OF SYMBOLS

- 1: Tire case
- 1A: Tire half body
- 2: Crown portion reinforcing layer
- 3: Tread rubber layer
- 4: Bead core
- 5: Seal member
- 10: Tire
- 11: Bead portion
- 12: Sidewall portion
- 13: Crown portion
- 20: Rim
- 21: Bead seat portion
- 22: Rim flange

## Claims

1. A resin-metal composite material comprising a metal material and a resin material that coats at least a part of a surface of the metal material, wherein
the resin material comprises, as a main component, a thermoplastic resin having a polar group; the surface of the metal material is treated with a buffer solution having a pH of from 5 to 7.2; the surface of the metal material treated with the buffer solution is additionally treated with an aqueous solution of a heterocyclic compound having two or more heteroatoms; and an abundance ratio of copper to a total amount of copper and zinc (Cu/(Cu + Zn) × 100) in the surface of the metal material is from 55 to 95% by mass.

2. The resin-metal composite material according to claim 1, wherein the thermoplastic resin having a polar group is a maleic acid-modified polyolefin.

3. The resin-metal composite material according to claim 1, wherein the heterocyclic compound is triazoles.

4. The resin-metal composite material according to claim 3, wherein the heterocyclic compound is a triazole having an amino group.

5. A tire comprising a circular tire frame formed of a resin material and a reinforcing layer composed of a reinforcing member wound around an outer circumference of the tire frame, wherein
the reinforcing member comprises the resin-metal composite material according to claim 1.

## Patentansprüche

1. Harz-Metall-Verbundstoff, beinhaltend ein Metallmaterial und ein Harzmaterial, welches mindestens einen Teil einer Oberfläche des Metallmaterials überzieht, wobei
das Harzmaterial als eine Hauptkomponente ein thermoplastisches Harz beinhaltet, welches eine polare Gruppe besitzt; wobei die Oberfläche des Metallmaterials mit einer Pufferlösung behandelt ist, welche einen pH-Wert zwischen 5 und 7,2 besitzt; wobei die Oberfläche des mit der Pufferlösung behandelten Metallmaterials zusätzlich mit einer wässrigen Lösung aus einer heterozyklischen Verbindung behandelt ist, welche ein oder mehrere Heteroatome besitzt; und ein Konzentrationsverhältnis von Kupfer zu einer Gesamtmenge von Kupfer und Zink (Cu/(Cu + Zn) x 100) in der Oberfläche des Metallmaterials zwischen 55 und 95 Gewichtsprozent beträgt.

2. Harz-Metall-Verbundstoff nach Anspruch 1, bei welchem das thermoplastische Harz, welches eine polare Gruppe besitzt, ein maleinsäuremodifiziertes Polyolefin ist.

3. Harz-Metall-Verbundstoff nach Anspruch 1, bei welchem die heterozyklische Verbindung aus Triazolen besteht.

4. Harz-Metall-Verbundstoff nach Anspruch 3, bei welchem die heterozyklische Verbindung aus einem Triazol besteht, welches eine Aminogruppe besitzt.

5. Reifen, beinhaltend einen kreisförmigen Reifenrahmen, gebildet aus einem Harzmaterial, und eine Verstärkungsschicht, bestehend aus einem Verstärkungsglied, welches um einen äußeren Umfang des Reifenrahmens gewunden ist, wobei
das Verstärkungsglied den Harz-Metall-Verbundstoff nach Anspruch 1 beinhaltet.

## Revendications

1. Matériau composite résine-métal comprenant un matériau de métal et un matériau de résine qui recouvre au moins une partie d'une surface du matériau de métal ; dans lequel :
le matériau de résine comprend, en tant que composant principal, une résine thermoplastique qui comporte un groupe polaire ; la surface du matériau de métal est traitée à l'aide d'une solution tampon qui présente un pH de 5 à 7,2 ; la surface du matériau de métal qui est traitée à l'aide de la solution tampon est traitée de façon additionnelle à l'aide d'une solution aqueuse d'un composé hétérocyclique qui comporte deux hétéroatomes ou plus ; et un rapport des teneurs isotopiques du cuivre sur une quantité totale de cuivre et de zinc (Cu/(Cu + Zn) x 100) dans la surface du matériau de métal va de 55 % à 95 % en masse.

2. Matériau composite résine-métal selon la revendication 1, dans lequel la résine thermoplastique qui comporte un groupe polaire est une polyoléfine modifiée par acide maléique.

3. Matériau composite résine-métal selon la revendication 1, dans lequel le composé hétérocyclique est des triazoles.

4. Matériau composite résine-métal selon la revendication 3, dans lequel le composé hétérocyclique est un triazole qui comporte un groupe amino.

5. Pneumatique comprenant une carcasse de pneumatique circulaire qui est formée par un matériau de résine et par une couche de renforcement qui est composée d'un élément de renforcement qui est enroulé autour d'une circonférence externe de la carcasse de pneumatique ; dans lequel :
l'élément de renforcement comprend le matériau composite résine-métal selon la revendication 1.
